# DEMANDE DE BREVET EUROPEEN

(11) **EP 2 955 597 A1**
(43) Date de publication de la demande: **16.12.2015**
(21) Numéro de dépôt: 15171104.1
(22) Date de dépôt: 09.06.2015
(51) Int. Cl.: G05B 15/02, H04L 12/28, G06F 3/048, G01C 21/20

(54) **SYSTÈME ET PROCÉDÉ DE COMMANDE D'ÉQUIPEMENTS PLACÉS DANS UN BÂTIMENT OU AUX ABORDS DE CE BÂTIMENT**

(30) Priorité: 10.06.2014 FR 1455236
(71) Demandeur: Convergence Investissement, 33100 Bordeaux (FR)
(72) Inventeur: Michel Philippe, 33150 CENON (FR)
(74) Mandataire: Ipside

(57) **Abrégé**

L'invention concerne un système de commande d'équipements placés dans un bâtiment, la position de chaque équipement (11) étant connue dans un repère spatial (14) et chaque équipement (11) comprenant un récepteur de commande, ledit système de commande comportant une unité de commande (10) mobile. Selon l'invention, ce système comprend :
- au moins deux balises (15) pour émettre des signaux de communication sans fil à courte portée,
- ladite unité de commande (10) comportant un moyen de communication sans fil capable de recevoir lesdits signaux et un moyen pour déterminer par triangulation la position de ladite unité de commande (10) dans ledit repère spatial (14) ainsi que le ou les récepteurs de commande placés à portée d'émission de ladite unité de commande (10) pour commander au moins un équipement (11) correspondant, et
- un moyen d'affichage d'une interface de commande dudit ou d'un des équipements ainsi déterminés, ledit moyen d'affichage étant celui de ladite unité de commande (10) ou d'un périphérique (16) appairé à ladite unité de commande (10).

## Description

### ARRIERE-PLAN DE L'INVENTION

### Domaine de l'invention

Le domaine de l'invention est celui de la domotique. La présente invention concerne plus particulièrement un système et un procédé de commande d'équipements placés dans un bâtiment ou aux abords immédiats de ce bâtiment.

### Arrière-plan technologique

Il est connu de mettre en réseau différents équipements électriques (chauffage, fermeture, dispositifs d'éclairage, ...) d'une habitation et de commander ceux-ci à partir d'un boîtier de commande central fixe. Eventuellement, une télécommande peut être associée à un tel boîtier pour commander celui-ci à distance.

Toutefois, un tel boîtier de commande étant, par nature, localisé dans une zone définie d'une habitation, la commande d'un équipement peut s'avérer difficile lorsque l'utilisateur n'est pas immédiatement présent dans cette zone de l'habitation ou est placé hors de portée d'émission de la télécommande. Il est alors nécessaire à ce dernier de se déplacer.

Bien entendu, un tel fonctionnement limité peut s'avérer laborieux pour l'utilisateur, notamment lorsque ce dernier est une personne âgée ou présente une incapacité physique.

En outre, un tel boîtier de commande est plutôt réservé à des équipements domotiques et n'est pas adapté pour commander des équipements de type domestique tels qu'un téléviseur, un lecteur de musique ou encore une machine à laver...

L'utilisateur doit, en conséquence, continuer à se munir de télécommandes dites "universelles" pour commander quelques équipements standards.

Or, ces télécommandes ne sont typiquement pas équipées de touches supplémentaires autorisant une adaptation de celles-ci aux évolutions des équipements, par exemple pour permettre d'activer une nouvelle fonction.

La procédure de programmation d'une télécommande universelle exige, par ailleurs, des compétences spéciales de la part de l'utilisateur.

En outre, les télécommandes sont généralement dépourvues d'écran d'affichage ou pour de rares télécommandes, proposent des contenus graphiques très limités. L'aspect ludique qu'elles pourraient dégager au travers d'une interface graphique, est donc rarement présent dans les télécommandes universelles.

Quoiqu'il en soit, une télécommande universelle reste un objet supplémentaire dont l'utilisateur doit se munir pour commander un équipement appairé. Bien entendu, avec le risque que cette télécommande ne soit pas facilement accessible.

Il existe donc un besoin pressant pour une unité de commande mobile autorisant la commande d'une pluralité d'équipements dans une habitation par le biais d'une interface graphique simple et pratique pour une utilisation intuitive.

Par ailleurs, on connait des systèmes permettant de localiser, de suivre ou encore de surveiller des personnes, lesquels intègrent généralement un système de positionnement global (Global Positioning System - GPS) et des algorithmes de traitement du signal.

Toutefois, bien qu'un GPS puisse se révéler très utile en environnement extérieur, il est connu que divers facteurs peuvent influencer négativement la précision d'un tel système.

A titre d'exemple, un certain nombre de limitations apparaissent lorsqu'un tel système est mis en oeuvre pour localiser ou suivre une personne en intérieur.

En effet, la ligne de visée des satellites nécessaire à la réception d'un signal peut être sensiblement masquée de sorte que les signaux GPS sont fortement atténués, voire absents.

Avec des signaux aussi faibles, les systèmes GPS ont des difficultés à recevoir les signaux GPS et à calculer de manière précise des données de positionnement.

Or, des données de positionnement fiables et précises d'un utilisateur ou d'un équipement constituent un pré-requis incontournable pour développer un système de commande d'équipements dans une habitation.

Il a été proposé de compenser ce manque de précision des systèmes GPS en utilisant des accéléromètres ou encore des gyroscopes. Toutefois, de tels capteurs sont complexes et pas adapté à des mesures d'objets fixes tels que sont les équipements domotiques et/ou domestiques.

Il existe ainsi un besoin pressant pour un système de localisation permettant de localiser avec une grande précision un utilisateur ou un objet à l'intérieur de bâtiments ou à proximité immédiate de bâtiments présentant une architecture complexe.

La présente invention vise à pallier les divers inconvénients de l'art antérieur en proposant un système et un procédé de commande à distance d'équipements dans un bâtiment, simples dans leur conception et dans leur mode opératoire, rapides et fiables, et permettant à partir d'un terminal mobile tel qu'un téléphone portable ou une tablette tactile, affichant une interface de commande simplifiée mais pratique, de commander un grand nombre d'équipements domotiques et/ou domestiques.

Un autre objet de la présente invention est un tel système apte à accepter de nouveaux équipements ou des équipements plus récents pouvant comporter des fonctions supplémentaires.

### BREVE DESCRIPTION DE L'INVENTION

A cet effet, l'invention concerne un système de commande d'équipements placés dans un bâtiment ou aux abords de ce bâtiment, la position de chaque équipement étant connue dans un repère spatial et chaque équipement comprenant un récepteur de commande, ledit système de commande comportant une unité de commande mobile.

Selon l'invention, ce système de commande comprend :
- au moins deux balises pour émettre des signaux de communication sans fil à courte portée,
- cette unité de commande comportant un moyen de communication sans fil capable de recevoir lesdits signaux de communication sans fil à courte portée et un moyen pour déterminer par triangulation la position de cette unité de commande dans ledit repère spatial ainsi que le ou les récepteurs de commande placés à portée d'émission de cette unité de commande pour commander directement ou au moyen d'une passerelle de traduction de langage de commande au moins un équipement correspondant, et
- un moyen d'affichage d'une interface de commande dudit ou d'un des équipements ainsi déterminés, ledit moyen d'affichage étant celui de ladite unité de commande mobile ou d'un périphérique appairé à ladite unité de commande.

Bien entendu, ces récepteurs de commande sont au moins capables de recevoir des signaux de communication sans fil. Ils peuvent également être équipés de moyen de communication sans fil pour recevoir et émettre des signaux de communication sans fil tels que des signaux de communication sans fil à courte portée.

Ce récepteur de commande peut donc, à titre non limitatif, être:
- le récepteur de commande d'un équipement spécifique tel qu'un équipement domestique (téléviseur, lecteur, ...),
- un boîtier de commande commandant plusieurs équipements domotiques et/ou domestiques,
- une passerelle de traduction de langage de commande. Cette dernière assure avantageusement la traduction et l'envoi des signaux de communication sans fil reçus par celle-ci vers des équipements ou des balises utilisant des protocoles de communication différents de ceux utilisés pour ces signaux de communication sans fil.

Le moyen pour déterminer le ou les récepteurs de commande placés à portée d'émission de l'unité de commande mobile peut comprendre, ou être relié à, une unité de stockage comportant l'ensemble des données relatives à la cartographie du bâtiment et/ou de ses abords ainsi que les différentes positions des équipements dans le repère spatial.

Préalablement, ou lorsqu'un nouvel équipement est positionné dans l'habitation ou aux abords de cette habitation, une étape de configuration permet la détermination des données de positionnement de chaque équipement avec une précision permettant de distinguer deux équipements distincts, et l'enregistrement de ces données dans l'unité de stockage. Cette étape de configuration peut être réalisée en positionnant l'unité mobile de commande directement sur l'équipement particulier dont on cherche à déterminer les données de positionnement et en activant les balises pour déterminer par triangulation la position de cette unité de commande mobile.

Cette unité de commande mobile peut être un terminal mobile, par exemple un téléphone portable tel qu'un smartphone ou encore une tablette tactile portable.

Le périphérique appairé peut être choisi dans le groupe comprenant une montre, une montre bracelet, une paire de lunette, un bracelet, un vêtement intelligent, un patch, un insert.

L'expression "périphérique appairé" doit s'entendre ici comme signifiant que ce périphérique est relié par une connexion sans fil permanente avec l'unité de commande mobile. A titre illustratif, cette connexion sans fil autorise l'échange de signaux de communication sans fil à courte porté entre ces deux appareils distincts.

Dans différents modes de réalisation particuliers de ce système de commande, chacun ayant ses avantages particuliers et susceptibles de nombreuses combinaisons techniques possibles:
- au moins une desdites balises est activée par un ensemble de commande pour commander la puissance devant être appliquée à un système électrique depuis une source d'alimentation électrique, ledit ensemble étant placé dans une même pièce dudit bâtiment que ledit récepteur de commande dudit au moins un équipement que l'on cherche à commander ou sur la façade dudit bâtiment.
De préférence, cette balise est capable de recevoir des signaux de communication sans fil et de piloter ledit ensemble de commande pour varier à distance ladite puissance devant être appliquée audit système électrique.
A titre purement illustratif, ce système électrique est un dispositif d'éclairage assurant l'éclairage de la pièce dans laquelle est placée ladite unité de commande mobile.

Ainsi, les balises radio mises en place peuvent en plus d'émettre le signal radio de référence, recevoir des commandes depuis l'unité mobile de commande, afin d'actionner par exemple un relais de puissance pour piloter un système électrique.
- chaque balise et/ou chaque récepteur de commande d'au moins un équipement comportant une caractéristique propre tel qu'un identifiant, ledit système comprend :
   - un moyen pour déterminer et enregistrer des ensembles de données relatives aux signaux de communication sans fil adressés par ladite unité de commande à au moins une desdites balises et/ou à au moins un desdits équipements pour les commander, en groupe d'ensembles possédant au moins une caractéristique similaire, ladite au moins une caractéristique comprenant l'identifiant de la balise ou du récepteur de commande ayant reçu ledit signal de communication correspondant, ledit ensemble de données comportant des données de positionnement de ladite unité de commande et de la balise ou dudit récepteur de commande dans ledit repère spatial,
   - un moyen pour déterminer au moins un ensemble représentant chaque groupe,
   - un moyen pour analyser des données relatives à un signal de communication sans fil émis par ladite unité de commande et reçu par une balise ou par un récepteur de commande et sélectionner un ensemble représentant un groupe en relation avec lesdites données ainsi analysées,
   - un moyen pour reproduire l'ensemble sélectionné représentant un groupe.

Une telle mémorisation statistique permet avantageusement d'éviter des phénomènes perturbateurs de la propagation des signaux de communication sans fil comme par exemple le passage d'une personne entre la balise et l'unité de commande mobile.
- ladite unité de commande comporte une unité de stockage comportant une bibliothèque de données relatives à chaque récepteur de commande pour permettre audit processeur d'afficher ladite interface de commande requise et/ou pour stocker des données reçues dudit équipement correspondant permettant d'afficher ladite interface de commande,
- lesdits signaux de communication sans fil à courte portée sont basés sur un protocole Bluetooth®, Zigbee® ou Communication en champ proche (NFC - Near Field Contact).
- ladite unité de commande mobile ayant un identifiant unique, ledit système comporte un moyen d'authentification utilisant ledit identifiant unique pour reconnaître que le signal de communication sans fil est adressé par une unité de commande autorisée.

Alternativement, cette unité de commande étant un terminal mobile équipé d'une carte SIM auquel est associé un code abonné SIM, ledit système comporte un moyen d'authentification utilisant ledit code abonné SIM pour reconnaître que le signal de communication sans fil est adressé par une unité de commande autorisée.

Ce signal de communication est par exemple un signal de commande dudit équipement ou de ladite balise envoyé par ladite unité mobile après que l'utilisateur ait agi sur l'interface de commande affichée sur ledit moyen d'affichage.

L'invention concerne encore un procédé de commande d'équipements placés dans un bâtiment ou aux abords de ce bâtiment, la position de chaque équipement étant connue dans un repère spatial et chaque équipement comprenant un récepteur de commande, selon lequel on utilise une unité de commande mobile.

Selon l'invention, on réalise au moins les étapes suivantes :
- on émet des signaux de communication sans fil à courte portée à partir d'au moins deux balises,
- on détermine la position de ladite unité de commande dans ledit repère spatial par triangulation à partir desdits signaux de communication sans fil à courte portée reçus par ladite unité de commande,
- on détermine le ou les récepteurs de commande placés à portée d'émission de ladite unité de commande pour commander au moins un équipement correspondant, et
- on affiche une interface de commande permettant de commander ledit au moins un équipement.

On peut afficher cette interface de commande sur un moyen d'affichage de l'unité de commande mobile ou sur un périphérique appairé avec cette unité de commande mobile, i.e. étant relié par une connexion sans fil permanente avec l'unité de commande mobile.

Le récepteur de commande peut faire partie intégrante d'un équipement ou être une passerelle de traduction de langage de commande pour convertir le signal de commande émis par l'unité de commande en un signal intelligible par l'équipement à piloter. L'envoi d'une commande au moyen de cette interface de commande peut ainsi être réalisé soit directement, soit au travers d'une passerelle reliée à un ou plusieurs équipements distincts sur un même réseau.

Dans différents modes de réalisation particuliers de ce procédé de commande, chacun ayant ses avantages particuliers et susceptibles de nombreuses combinaisons techniques possibles:
- chaque équipement ayant un identifiant, on affiche sur un moyen d'affichage l'identifiant du ou des équipements dont le récepteur de commande correspondant est placé dans un espace délimité par la portée d'émission des signaux émis par ladite unité de commande et l'utilisateur ayant sélectionné ledit ou un desdits équipements ainsi déterminés, on affiche une interface de commande dudit équipement ainsi sélectionné. Alternativement, on affiche une interface de commande de l'équipement le plus proche de l'unité de commande mobile.
- on utilise une transmission radio de courte portée basée sur un protocole Bluetooth®, Zigbee® ou Communication en champ proche (NFC - Near Field Contact).
- au moins une desdites balises étant capable de recevoir des signaux de communication sans fil et de piloter un ensemble de commande pour commander la puissance devant être appliquée à un système électrique depuis une source d'alimentation électrique, on adresse à ladite balise au moins un signal de communication sans fil pour commander à distance ladite puissance devant être appliquée audit système électrique.

Ces signaux de communication peuvent être des signaux de communication sans fil à courte portée.
- ayant enregistré des ensembles de données relatives aux signaux de communication sans fil adressés par ladite unité de commande à au moins une desdites balises et/ou à au moins un desdits équipements pour les commander et pour chaque signal de communication sans fil, lui ayant associé l'identifiant de la balise ou du récepteur de commande ayant reçu ledit signal ainsi que des données de positionnement de ladite unité de commande dans ledit repère spatial lors de l'envoi dudit signal, on affiche sur ledit moyen d'affichage au moins une suggestion de commande, chaque suggestion correspondant à au moins un ensemble de données associé aux données de position de ladite unité de commande dans ledit repère spatial déterminées par triangulation.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 est une représentation schématique et partiel d'un système de commande selon un mode de réalisation préféré de l'invention ;
- la figure 2 montre l'unité de commande du système de la figure 1 mis en oeuvre pour commander un équipement spécifique d'une habitation ;
- la figure 3 montre l'unité de commande du système de la figure 1 à laquelle est appairé un périphérique comportant un moyen d'affichage pour afficher l'interface de commande permettant à l'utilisateur de commander un équipement d'une habitation au travers d'un réseau de l'habitation;

### DESCRIPTION DETAILLEE DE MODES DE REALISATION DE L'INVENTION

On notera en premier lieu que les figures ne sont pas à l'échelle.

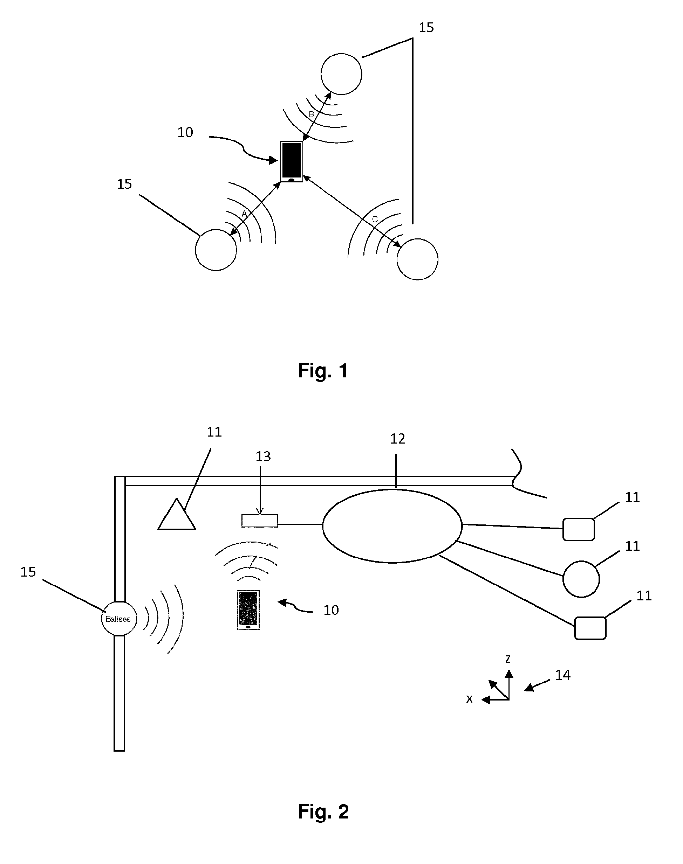

Les Figures 1 à 3 montrent un système de commande selon un mode de réalisation préféré de l'invention. Ce système de commande comporte une unité de commande 10 mobile qui est ici un téléphone portable tel qu'un Smartphone capable de communiquer selon différents protocoles Wifi, Bluetooth, NFC ou Zigbee, pour commander une installation domotique et/ou des équipements 11 domestiques d'une habitation.

Au moins certains de ces équipements 11 communiquent entre eux sur un réseau 12 de type local (réseau LAN) ou mettant en oeuvre un réseau IP sécurisé, l'accès au réseau étant alors protégé par une clé telle qu'un mot de 64 ou 128 bits et par un algorithme d'authentification. Certains équipements 11 peuvent communiquer au travers d'une passerelle 13 qui traduit par exemple les communications IP dans un langage de communication adapté aux équipements 11 domotiques.

Ces équipements 11 sont capables d'émettre ou de recevoir des signaux et comprennent chacun un récepteur de commande (non représenté) de systèmes de puissances électriques ou de systèmes électroniques audiovisuels permettant d'activer la ou les diverses fonctions de l'équipement correspondant. La position de chaque équipement 11 est connue dans un repère spatial 14 lié à l'habitation.

Ce système comprend trois balises 15 émettant des signaux radio à courte portée tels que des signaux Bluetooth. Ces balises 15 fixes permettent au processeur (non représenté) du téléphone 10 portable qui est capable de recevoir lesdits signaux de communication sans fil à courte portée, de déterminer par triangulation sa position dans le repère spatial 14 de l'habitation, le téléphone 10 portable étant bien entendu pourvu des programmes nécessaires au fonctionnement du système.

Le processeur du téléphone 10 portable peut déterminer le récepteur de commande d'un équipement 11 à piloter qui se trouve le plus proche de lui et à portée d'émission de ce téléphone.

Un programme stocké dans la mémoire du téléphone mobile 10 permet à ce dernier de communiquer avec les récepteurs de commande des équipements 11 de l'habitation à commander via le réseau 12 informatique IP sans fil de l'habitation, soit directement si les équipements 11 à piloter sont en IP (Fig. 2), soit au travers d'une passerelle 13 domotique faisant le lien, ou la traduction, entre le protocole TCP/IP et un système de communication domotique spécifique.

La combinaison de l'information de proximité des équipements 11 associée à la capacité de pilotage de ces équipements permet de créer une interface logicielle de commande sur le téléphone 10 portable qui va privilégier les équipements les plus proches. On créé ainsi une interface logicielle de commande pour l'utilisateur qui sera adaptée au lieu où il se situe. Cette interface logicielle de commande ne nécessitant pas le choix du lieu de l'appareil à piloter, elle sera donc plus simple et plus ergonomique à utiliser pour l'usager.

De la même façon, un apprentissage des pièces de la maison peut être effectué, ce qui permet de positionner spatialement les équipements par pièce, et donc de créer une interface logicielle de commande qui va privilégier le pilotage des équipements domotiques et/ou domestiques de la pièce où se situe le téléphone.

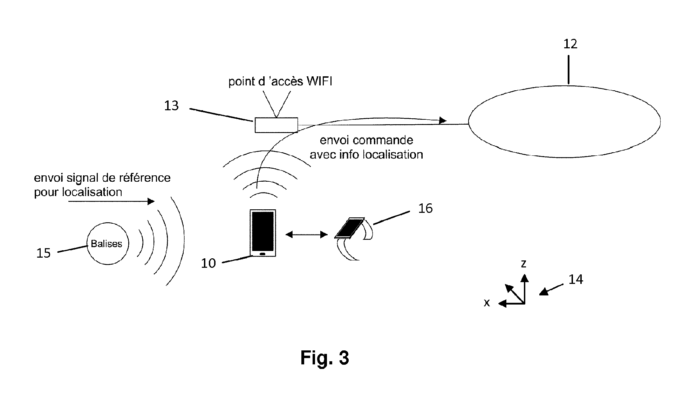

Des périphériques 16 sont fréquemment raccordés au téléphone mobile 10. La capacité de piloter spécifiquement les équipements 11 de la pièce où est situé le téléphone 10 mobile est étendue aux périphériques 16 éventuels de ce téléphone (Fig.3).

Lorsqu'un tel périphérique 16 comporte un moyen d'affichage tel qu'un écran à cristaux liquides (LCD) ou encore LED, et que ce périphérique 16 est appairé au téléphone 10 mobile, l'interface de commande d'un équipement 11 peut être affichée sur ce moyen d'affichage de sorte que l'utilisateur commande l'équipement 11 depuis ce périphérique 16.

Par exemple, un affichage simple d'une commande allumé / éteint sur une montre périphérique 16 d'un téléphone 10 portable est complètement identique dans deux pièces de la maison, mais pilote d'une manière différentiée uniquement l'éclairage de la pièce où se trouve l'usager. La commande de l'éclairage par l'usager est donc effectuée par un geste simple et unique, identique dans toutes les pièces de la maison. L'action de l'usager sur l'interface graphique de commande allumé / éteint affichée sur sa montre par une application informatique installé sur celle-ci, envoie une information à une application informatique résident dans le téléphone 10 portable auquel la montre est raccordée. L'application informatique installée dans ledit téléphone 10 a par ailleurs pu déterminer grâce à la triangulation effectuée depuis les balises de communication sans fil à courte portée sa position et éventuellement la pièce dans laquelle il se trouve. L'application informatique installée dans ledit téléphone 10 peut donc envoyer la commande allumer / éteindre à la lumière située à proximité de l'usager ou dans la pièce où il se trouve, soit directement à la lumière si celle-ci dispose d'un moyen de communication disponible sur le téléphone 10 mobile, soit à une passerelle 13 domotique via le réseau IP Wifi, qui traduit les commandes IP dans un langage de communication adapté à la lumière à piloter.

Selon un autre mode de réalisation de l'invention, une paire de lunette 16 équipée d'un système de suivi du regard ainsi que d'une caméra qui filme la scène regardée par l'usager, et d'un capteur sonore de la voix de l'usager et/ou de boutons de commandes, transmet à l'application informatique installée dans le téléphone 10 mobile l'image de la vision de l'usager, de l'objet qu'il vise du regard, et de l'éventuel ordre de commande de l'usager. L'application informatique du téléphone permet ainsi de reconnaitre l'objet qui est visé par l'usager.

L'envoi d'une commande allumer / éteindre par l'usager depuis un des boutons placés sur la lunette est transmise à l'application du téléphone mobile, ou une commande vocale reçue par la lunette est transmise à l'application du téléphone mobile qui l'interprète via un système de reconnaissance vocale.

L'application informatique installée dans ledit téléphone a par ailleurs pu déterminer grâce à la triangulation effectuée depuis les balises de communication sans fil à courte portée sa position et éventuellement la pièce dans laquelle il se trouve. L'application informatique installée dans ledit téléphone peut donc envoyer la commande allumer / éteindre à l'équipement visé par l'usager dans la pièce où il se trouve, soit directement à l'équipement à piloter si celui-ci dispose d'un moyen de communication disponible sur le téléphone mobile, soit à une passerelle via le réseau IP Wifi, qui traduit les commandes IP dans un langage de communication adapté à la l'équipement à piloter.

## Revendications

1. Système de commande d'équipements placés dans un bâtiment ou aux abords de ce bâtiment, la position de chaque équipement (11) étant connue dans un repère spatial (14) et chaque équipement (11) comprenant un récepteur de commande, ledit système de commande comportant une unité de commande (10) mobile, **caractérisé en ce que** ledit système de commande comprend :
- au moins deux balises (15) pour émettre des signaux de communication sans fil à courte portée,
- ladite unité de commande (10) comportant un moyen de communication sans fil capable de recevoir lesdits signaux de communication sans fil à courte portée et un moyen pour déterminer par triangulation la position de ladite unité de commande (10) dans ledit repère spatial (14) ainsi que le ou les récepteurs de commande placés à portée d'émission de ladite unité de commande (10) pour commander directement ou au moyen d'une passerelle de traduction de langage de commande, au moins un équipement (11) correspondant, et
- un moyen d'affichage d'une interface de commande dudit ou d'un des équipements ainsi déterminés, ledit moyen d'affichage étant celui de ladite unité de commande (10) mobile ou d'un périphérique (16) appairé à ladite unité de commande (10).

2. Système selon la revendication 1, **caractérisé en ce qu'**au moins une desdites balises (15) est activée par un ensemble de commande pour commander la puissance devant être appliquée à un système électrique depuis une source d'alimentation électrique, ledit ensemble étant placé dans une même pièce dudit bâtiment que ledit récepteur de commande dudit au moins un équipement (11) que l'on cherche à commander ou sur la façade dudit bâtiment.

3. Système selon la revendication 2, **caractérisé en ce que** ladite balise est capable de recevoir des signaux de communication sans fil et de piloter ledit ensemble de commande pour varier à distance ladite puissance devant être appliquée audit système électrique.

4. Système selon l'une quelconque des revendications 1 à 3, **caractérisé en ce que** chaque balise et/ou chaque récepteur de commande d'au moins un équipement (11) comportant une caractéristique propre tel qu'un identifiant, ledit système comprend :
- un moyen pour déterminer et enregistrer des ensembles de données relatives aux signaux de communication sans fil adressés par ladite unité de commande (10) à au moins une desdites balises (15) et/ou à au moins un desdits équipements pour les commander, en groupe d'ensembles possédant au moins une caractéristique similaire, ladite au moins une caractéristique comprenant l'identifiant de la balise ou du récepteur de commande ayant reçu ledit signal de communication correspondant, ledit ensemble de données comportant des données de positionnement de ladite unité de commande (10) et de la balise ou dudit récepteur de commande dans ledit repère spatial (14),
- un moyen pour déterminer au moins un ensemble représentant chaque groupe,
- un moyen pour analyser des données relatives à un signal de communication sans fil émis par ladite unité de commande (10) et reçu par une balise ou par un récepteur de commande et sélectionner un ensemble représentant un groupe en relation avec lesdites données ainsi analysées,
- un moyen pour reproduire l'ensemble sélectionné représentant un groupe.

5. Système selon l'une quelconque des revendications 1 à 4, **caractérisé en ce que** ladite unité de commande (10) comporte une unité de stockage comportant une bibliothèque de données relatives à chaque récepteur de commande pour permettre audit processeur d'afficher ladite interface de commande requise et/ou pour stocker des données reçues dudit équipement (11) correspondant permettant d'afficher ladite interface de commande.

6. Système selon l'une quelconque des revendications 1 à 5, **caractérisé en ce que** lesdits signaux de communication sans fil à courte portée sont basés sur un protocole Bluetooth, Zigbee ou de communication en champ proche (NFC - Near Field Contact).

7. Système selon l'une quelconque des revendications 1 à 6, **caractérisé en ce que** ladite unité de commande (10) mobile ayant un identifiant unique, ledit système comporte un moyen d'authentification utilisant ledit identifiant unique pour reconnaître que ledit signal de communication sans fil est adressé par une unité de commande (10) autorisée.

8. Procédé de commande d'équipements placés dans un bâtiment ou aux abords de ce bâtiment, la position de chaque équipement (11) étant connue dans un repère spatial (14) et chaque équipement (11) comprenant un récepteur de commande, selon lequel on utilise une unité de commande (10) mobile, **caractérisé en ce qu'**on réalise les étapes suivantes :
- on émet des signaux de communication sans fil à courte portée à partir d'au moins deux balises (15),
- on détermine la position de ladite unité de commande (10) dans ledit repère spatial (14) par triangulation à partir desdits signaux de communication sans fil à courte portée reçus par ladite unité de commande (10),
- on détermine le ou les récepteurs de commande placés à portée d'émission de ladite unité de commande (10) pour commander au moins un équipement (11) correspondant, et
- on affiche une interface de commande permettant de commander ledit au moins un équipement (11).

9. Procédé selon la revendication 8, **caractérisé en ce que** chaque équipement (11) ayant un identifiant, on affiche sur un moyen d'affichage l'identifiant du ou des équipements dont le récepteur de commande correspondant est placé dans un espace délimité par la portée d'émission des signaux émis par ladite unité de commande (10) et l'utilisateur ayant sélectionné ledit ou un desdits équipements ainsi déterminés, on affiche une interface de commande dudit équipement (11) ainsi sélectionné.

10. Procédé selon la revendication 8, **caractérisé en ce qu'**on affiche une interface de commande de cet équipement (11) le plus proche de l'unité de commande (10) mobile.

11. Procédé selon l'une quelconque des revendications 8 à 10, **caractérisé en ce qu'**on affiche ladite interface de commande sur un moyen d'affichage d'un périphérique (16) appairé à ladite unité de commande (10).

12. Procédé selon l'une quelconque des revendications 8 à 11, **caractérisé en ce qu'**au moins une desdites balises (15) étant capable de recevoir des signaux de communication sans fil et de piloter un ensemble de commande pour commander la puissance devant être appliquée à un système électrique depuis une source d'alimentation électrique, on adresse à ladite balise au moins un signal de communication sans fil pour commander à distance ladite puissance devant être appliquée audit système électrique.

13. Procédé selon l'une quelconque des revendications 8 à 12, **caractérisé en ce qu'**ayant enregistré des ensembles de données relatives aux signaux de communication sans fil adressés par ladite unité de commande (10) à au moins une desdites balises (15) et/ou à au moins un desdits équipements pour les commander et pour chaque signal de communication sans fil, lui ayant associé l'identifiant de la balise ou du récepteur de commande ayant reçu ledit signal ainsi que des données de positionnement de ladite unité de commande (10) dans ledit repère spatial (14) lors de l'envoi dudit signal, on affiche sur ledit moyen d'affichage au moins une suggestion de commande, chaque suggestion correspondant à au moins un ensemble de données associé aux données de position de ladite unité de commande (10) dans ledit repère spatial (14) déterminées par triangulation.
